Europäisches Patentamt

European Patent Office

Office européen des brevets

(11) Publication number:

**0 157 437**
**B1**

## EUROPEAN PATENT SPECIFICATION

(45) Date of publication of patent specification: **24.05.89**

(21) Application number: **85200280.7**

(22) Date of filing: **28.02.85**

(51) Int. Cl.⁴: **F 16 L 55/07**

(54) A device for deaerating or aerating of liquids flowing through a conduit.

(30) Priority: **29.02.84 NL 8400643**

(43) Date of publication of application:
**09.10.85 Bulletin 85/41**

(45) Publication of the grant of the patent:
**24.05.89 Bulletin 89/21**

(84) Designated Contracting States:
**AT BE CH DE FR GB LI NL SE**

(56) References cited:
**EP-A-0 096 107**
**DE-A-2 620 380**

(73) Proprietor: **Kooren, Jacoba Wilhelmina M.**
**Kasteel Bouvignestraat 6**
**NL-5037 HD Tilburg (NL)**

(72) Inventor: **van den Blink, Arie Johannes Sytse**
**Wipmolen 2**
**NL-3352 XP Papendrecht (NL)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

Courier Press, Leamington Spa, England.

## Description

The invention relates to a device for deaerating or aerating of liquids flowing through a conduit, comprising a housing having an inlet to be connected to the conduit at the deaerating location and having an outlet in an upper wall, which cooperates with a valve member which is vertically guided in said housing and is connected with a float.

Such devices are known and are used on a large scale for the deaeration of liquids pumped through conduits. The deaeration or aeration device is connected at a high level location of the conduit or conduit system respectively and its purpose is e.g. to quickly discharge the air which is collected in the conduit under varying pumping conditions. It also occurs, e.g. in case of waste water, that air (via a connection serving for that purpose) is to be supplied thorugh the device to the flowing liquid.

The well-known devices of this kind have the disadvantage, that especially with relatively high pumping pressures, the valve body is caused by the liquid pressure to close rather quickly and is permitted to open again only after the liquid pressure has, at least temporarily, dropped below a certain value. This means, that the device is not suitable for use as a deaerator for a system operating constantly at a rather high pumping pressure level.

Although air will keep separating from the liquid also when said valve is closed and will collect to the space of the closed valve housing and thereby causing the liquid in the valve housing to lower, such process proceeds rather slowly. It consequently takes too much time until the liquid, as a result of the increase in pressure in the air volume on top of it, has lowered to a level which permits the valve to open again.

The invention aims at to overcome the above disadvantage and thereby to provide a deaerator, the operation of which is substantially independent of the momentary conduit pressure.

According to the invention this aim is achieved in that the valve member is connected, via a connecting neck extending through the upper wall of the housing, with a second valve member which cooperates with a seat surrounding an outlet opening in a lower wall of an auxiliary chamber, which communicates, via a passageway through the connecting neck, with the space under said first valve member the arrangement being such that the valve system when being in movement, will cause both of said outlets to be simultaneously opened or closed by the respective valve member. With the device according to the invention air may, while the valve system is opened, escape to the atmosphere along two distinct ways, viz. directly via the main outlet of the valve body, and via the passageway through the connecting neck, the auxiliary chamber and the outlet opening of said auxiliary chamber. When the conduit pressure has reached a level at which the valve system closes, the air, which continues to separate from the liquid, will be collected not only in the space under the housing wall portion containing the main outlet opening, but may also escape to the closed auxiliary chamber. Within a short period of time a pressure will be built up within said auxiliary chamber of such an extent that the upper side of the auxiliary valve is subjected to a force, which will cause the valve to open for some time.

In a preferred embodiment the valve system is guided by means of said connecting neck through a central guiding opening in the upper wall, the outlet in said upper wall being constituted by a plurality of orifices around said central guiding opening.

According to a further feature of the invention the auxiliary chamber is located within a stand-piece placed on the upper wall of the housing, said stand-piece having a lateral opening to the atmosphere.

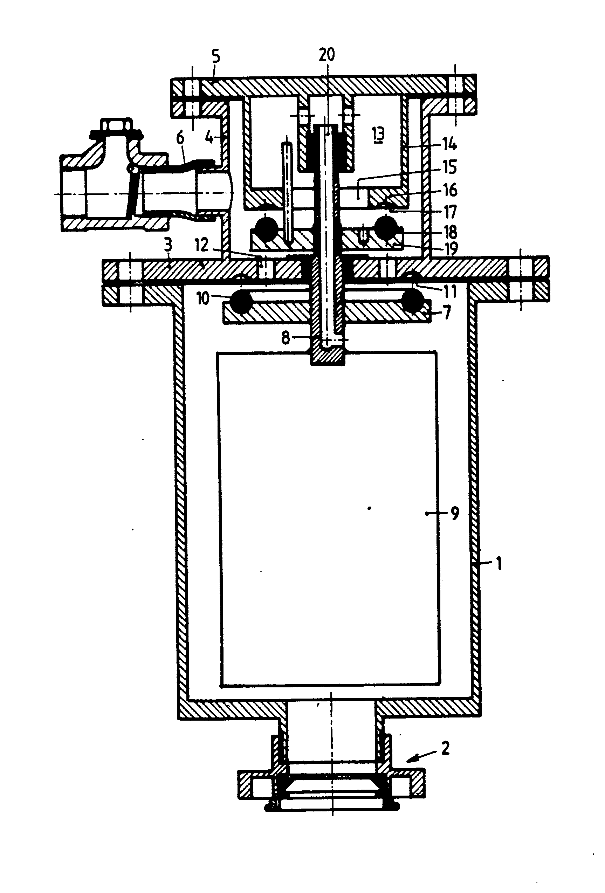

The invention will be hereinafter further described by way of example with reference to the accompanying drawing.

The deaerating device shown in the drawing in vertical sectional view comprises a e.g. cylindrical housing 1, the bottom wall of which is provided with an inlet 2 to be connected at the deaeration location of the liquid conduit to be deaerated and the upper wall of which is constituted by a cover 3. A stand-piece 4, formed by a cylindrical wall, is placed on top of the cover 3, has its upper end closed by a cover 5 and is provided with a lateral outlet 6 towards the atmosphere.

The space under the cover 3 constitutes the main valve chamber and is occupied by a first valve member 7 and a float body 9 connected with the former by means of a connecting neck 8. The valve member 7 carries at its upper side a sealing ring 10, which cooperates with a corresponding annular seat 11 at the lower side of the cover 3.

In the central portion of the cover 3, surrounded by the seat 11, a plurality of passage openings 12 are provided, which together constitute the main outlet opening of the deaerator. The connecting neck 8 extends through a central guiding opening in the cover 3 outwardly into an auxiliary chamber 13 formed within the stand-piece 4. Said auxiliary chamber is delimited by a circumferential valve 14 suspending from the cover 5 and has an annular bottom wall 16 delimiting a central opening 15. The annular bottom wall 16 has at its lower side a seat 17 for the annular sealing element 18 on the upper side of an auxiliary valve 19 provided on said connecting neck 8 at a distance above the cover 3. The vertical spacing between the seats 11 and 17 corresponds with that between the main valve 7 and the auxiliary valve 19, so that both of said valves will simultaneously open or close upon a vertical movement of the connecting neck 8 through the central guide opening in the cover 3.

The connecting neck 8 has a passageway 20, the upper end of which debouches into the auxiliary chamber 13 and the lower end of which debouches into the main valve chamber via a lateral opening between the main valve 7 and the float body 9.

In operation, with the device connected to a liquid transport conduit, the liquid will penetrate into the main valve chamber and will expel air from said main valve chamber through the passage openings 12 as well as through the passageway 20 and the auxiliary chamber 11.

As soon as the liquid exceeds a level, at which the amount of liquid, displaced by the float body 9 and consequently the upward force exerted by the liquid onto the valve assembly equals the weight of said valve assembly, the valve 7 and 19 will be pressed onto the respective seat, so that the deaeration is interrupted. Air, which keeps separating from the flowing liquid, may, however, escape via the passageway 20 to the auxiliary chamber 13 and will build up in the latter a pressure which in a short period of time will result in an opening force acting upon the upper side of the auxiliary valve 19. This opening force will cause the valve assembly to open for a short peroid of time, so that air may escape again to the atmosphere, until the valve assembly will close again for a short period of time. The device according to the invention is capable of discharging large amounts of air separating from the flowing liquid. Due to this it is particularly suitable for use in waste water processing systems.

The deaerating device shown in the drawing may also be used for aerating purposes when the check valve 6a has been removed from the outlet 6.

## Claims

1. A device for deaerating or aerating liquids flowing through a conduit, comprising a housing (1) having an inlet (2) to be connected to the conduit at the deaerating location and having an outlet (12) in an upper wall (3), which cooperates with a valve member (7) which is vertically guided in said housing (1, 3) and is connected with a float (9), characterized in that the valve member (7) is connected, via a connecting neck (8) extending through the upper wall (3) of the housing (1), with a second valve member (19) which cooperates with a seat (17) surrounding an outlet opening (15) in a lower wall of an auxiliary chamber (13) which communicates via a passageway (20) through the connecting neck (8), with the space under said first valve member (7), the arrangement being such that the valve system (7, 8, 19) when being in movement, will cause both of said outlets (12, 15) to be simultaneously opened or closed by the respective valve member (7, 19).

2. A device according to claim 1, characterized in that the valve system (7, 8, 19) is guided by means of said connecting neck (8) through a central guiding opening in the upper wall (3), the outlet in said upper wall (3) being constituted by a plurality of orifices (12) around said central guiding opening.

3. A device according to claims 1—2, characterized in that the auxiliary chamber (13) is located within a stand-piece (4) placed on the upper wall (3) of the housing (1), said stand-piece (4) having a lateral opening (6) to the atmosphere.

## Patentansprüche

1. Vorrichtung zum Be- oder Entlüften von durch eine Leitung strömenden Flüssigkeiten, mit einen Gehäuse (1), welches einen an die Leitung im Entlüftungsbereich anzuschließenden Einlaß (2) und einen Auslaß (12) in einer Oberwand (3) aufweist, wobei der Auslaß (12) mit einem senkrecht in dem Gehäuse (1, 3) geführten und mit einem Schwimmer (9) verbundenen Ventilschließkörper (7) zusammenwirkt, dadurch gekennzeichnet, daß der Ventilschließkörper (7) über ein sich durch die Oberwand (3) des Gehäuses (1) erstreckendes Verbindungshalsstück (8) mit einem zweiten Ventil (19) verbunden ist, welches mit einem eine Auslaßöffnung (15) in einer Unterwand einer Hilfskammer (13) umschließenden Sitz (17) zusammenwirkt, wobei die Kammer (13) über einen Durchgang (20) durch das Verbindungshalsstück (8) mit dem Raum unter dem ersten Ventil (7) kommuniziert und bei der Bewegung des Ventilsystems (7, 8, 19) beide Auslässe (12, 15) durch den jeweiligen Ventilschließkörper (7, 19) simulten zu öffnen oder zu schließen sind.

2. Vorrichtung nach Anspruch 1, dadurch gekennzeichnet, daß das Ventilsystem (7, 8, 19) mittels des Verbindungshalsstückes (8) durch eine zentrale Führungsöffnung in der Oberwand (3) geführt ist und daß der Auslaß in der Oberwand (3) aus einer Vielzahl von Öffnungen (12) um die zentrale Führungsöffnung herum ausgebildet ist.

3. Vorrichtung nach Anspruch 1 bis 2, dadurch gekennzeichnet, daß die Hilfskammer (13) in einem Ständerstück (4) auf der Oberwand (3) des Gehäuses (1) vorgesehen ist, wobei das Ständerstück (4) eine seitliche Öffnung (6) zur Außenluft aufweist.

## Revendications

1. Un dispositif pour aérer ou désaérer des liquides circulant dans un conduit, comportant un carter (1) comprenant une entrée (2) prévue opur être raccordée au conduit à l'emplacement de la désaération et une sortie (12) ménagée dans une paroi supérieure (3) qui coopère avec un élément de vanne (7) guidé verticalement dans ledit carter (1, 3) et relié à un flotteur (9), caractérisé en ce que l'élément de vanne (7) est raccordé, par l'intermédiaire d'un col de raccordement (8) se prolongeant à travers la paroi supérieure (3) du carter (1), à un second élément de vanne (19) qui coopère avec un siège (17) entourant un orifice de sortie (15) aménagé dans la paroi inférieure d'une chambre auxiliaire (13) qui communique, par l'intermédiaire d'une tubulure de passage (20) prévu à travers le col de raccordement (8), avec l'espace situé au-dessous dudit premier élément de vanne (7), l'agencement étant tel que, lorsque le système de vannes (7, 8, 19) est en mouvement, il entraîne l'ouverture simultanée ou la fermeture simultanée de l'une et l'autre des sorties (12, 15), par les éléments de vannes respectifs (7, 19).

2. Un dispositif suivant la revendication 1, caractérisé en ce que le système de vannes (7, 8, 19) est guidé par ledit col de raccordement (8) à travers un orifice de guidage central aménagé dans la paroi supérieure (3), la sortie prévue dans ladite paroi supérieure (3) étant constituée par une pluralité d'orifices (12) disposés autour dudit orifice de guidage central.

3. Un dispositif suivant les revendications 1 et 2, caractérisé en ce que la chambre auxiliaire (13) est située à l'intérieur d'une bride support (4) placée sur la paroi supérieure (3) du carter (1), ladite bride support (4) comportant une ouverture latérale (6) communiquant avec l'atmosphère.